# EUROPEAN PATENT APPLICATION

(11) **EP 2 698 970 A1**
(43) Date of publication of application: **19.02.2014**
(21) Application number: 12856067.9
(22) Date of filing: 18.10.2012
(51) Int. Cl.: H04M 1/03, H04M 1/02, H04R 1/00

(54) **MOBILE PHONE EMPLOYING BONE CONDUCTION DEVICE**

(30) Priority: 06.12.2011 JP 2011266755
(71) Applicant: Temco Japan Co., Ltd., Tokyo 168-0062 (JP)
(72) Inventor: The designation of the inventor has not yet been filed
(74) Representative: Novagraaf Technologies
(86) International application number: PCT/JP2012/076890
(87) International publication number: WO 2013/084595

(57) **Abstract**

Problem to be Solved

To provide a mobile phone using a bone conduction device which minimizes the installation space required therefor; which can be assembled easily; with which there is no possibility of foreign matters, such as iron powder and dirt and dust, getting in from around the bone conduction device; and yet which allows it to deliver a high volume output with no need for increasing the thickness of the housing of the mobile phone body, being able to be used without an obstacle under noise conditions.

Solution

In one face of a housing 1, there is provided an opening 2 having a diameter larger than that of a bone conduction device 3 to be installed therein, with a buffering member 4 being disposed on the inner face of the opening 2, and an abutting member 7 which is fixed to a plate yoke 15 constituting the bone conduction device 3 being supported by the buffering member 4 such that the top face of the abutting member 7 is located slightly above the surface of the housing 1. In another embodiment, the buffering member 4 is an annular plate in which there is formed a central hole 5 having a diameter slightly smaller than the outer diameter of the bone conduction device 3, a half portion on the outer edge side of the buffering member 4 being securely set on the upper edge portion of the opening 2 of the housing 1, and the outer edge portion of the abutting member 7 being securely set on the upper edge portion of the central hole 5 in the buffering member 4.

## Description

### Technical Field

The present invention relates to a mobile phone using a bone conduction device, and more particularly, to a mobile phone using a bone conduction device as a speaker and/or microphone, the bone conduction device being applied to the head of a user in service for sounding a received voice or picking up a bone conducted sound.

### Background Art

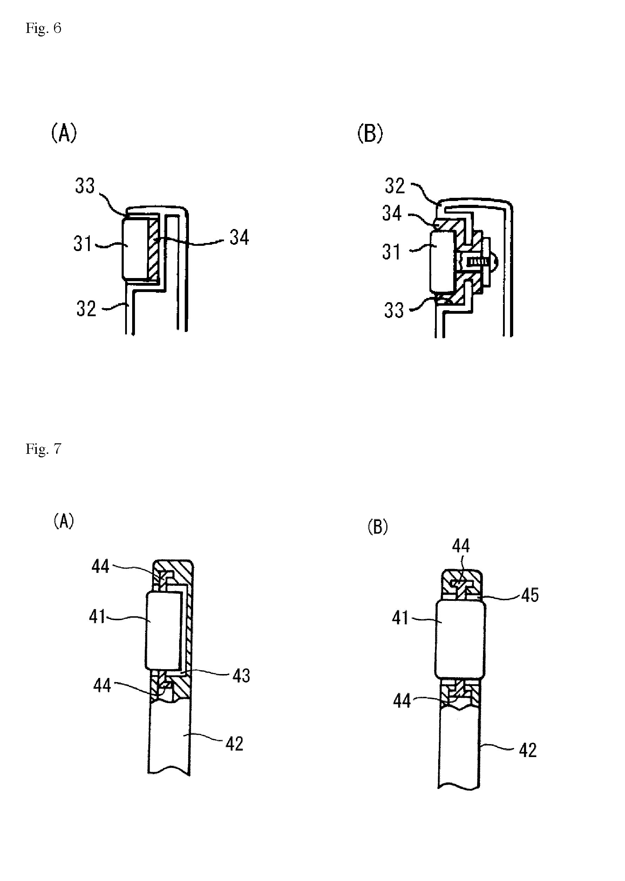

In the case where the bone conduction device is to be installed on the body of a mobile phone, fixing it directly to a case of the mobile phone body can cause the entire case to be vibrated, resulting in a so-called sound leak being generated, which can be a problem. In order to solve this problem, with a mobile phone using a conventional bone conduction speaker, the bone conduction speaker 31 has been installed therein, being accommodated in a recessed portion 33 provided in an appropriate area of a housing 32 along the direction of the thickness thereof through a buffering member 34 for securing isolation from the housing 32. In that case, the buffering member 34 is disposed only on the bottom face of the recessed portion 33 (Figure 6(A)) or disposed from the bottom face to the side face (Figure 6(B)).

The mobile phone using the aforementioned conventional bone conduction speaker is convenient, allowing a received sound to be caught even under noise conditions, however, since it is required that the recessed portion 33 for accommodating the bone conduction speaker be provided, and the buffering member 34 be disposed at least on the bottom face thereof, such mobile phone tends to be thick as compared to a mobile phone which adopts a general sound-pressure type speaker. Especially in the case of a model of folding type, the uncomfortable feeling due to such increase in thickness will be remarkable.

In addition, in the case of the aforementioned configuration, a thin buffering member is used in order to suppress the thickness from being increased, thereby the buffering action by the buffering member being weak, and thus a sufficient isolation between the housing and the bone conduction speaker cannot be secured. As a result of this, delivering a high volume output will involve a large echo back, thereby in order to avoid this, the volume output need be suppressed, which has been a problem.

This holds true also for a bone conduction microphone, which can be configured with practically the same structure as that of the bone conduction speaker, although there is a difference between these in that the bone conduction speaker outputs from a diaphragm while the bone conduction microphone picks up a bone conducted sound through the diaphragm.

In view of such a problem, the applicant of the present application has already proposed a bone conduction device which allows it to deliver a high volume output with no need for increasing the thickness of the housing of a mobile phone body, which can be used without any obstacle under noise conditions, and with which the built-in bone conduction speaker for communication can also be utilized as incoming call reporting means (Japanese Patent No. 4307446).

The mobile phone using a bone conduction device according to this proposal uses a bone conduction device 41 as a speaker and/or microphone, including a recessed portion 43 having a diameter larger than that of the bone conduction device 41 provided in a housing 42 of a mobile phone body; and a buffering member 44 being disposed between the inner face of the recessed portion 43 and the outside face of the bone conduction device 41, wherein the buffering member 44 supports the bone conduction device 41 with a space where no buffering member 44 exists being maintained between the bone conduction device 41 and the bottom face of the recessed portion 43, and the vibration face is flush with or slightly projected from the surface of the housing 42 (Figure 7).

### Citation List

### Patent Literature

Patent Document 1: Japanese Unexamined Patent Application Publication No. 2003-348208
Patent Document 2: Japanese Unexamined Patent Application Publication No. 2002-352000
Patent Document 3: Japanese Patent No. 4307446

### Disclosure of the Invention

### Problems to be Solved by the Invention

However, the mobile phone using the bone conduction device according to the aforementioned proposal has a configuration in which the recessed portion 43 having a diameter larger than that of the bone conduction device 41 is provided in the housing 42, and inside the recessed portion 43, the bone conduction device 41 is installed through the buffering member 44 disposed in the inner face thereof, thereby presenting a problem that dirt and dust are easily stuck to and accumulated in the gap between the bone conduction device 41 and the inner face of the recessed portion 43. In addition, there arise a problem that a space for fixing the outside portion of the buffering member 44 to the inner face of the recessed portion 43 is required, and another problem that, in order to stably maintain the space between the bone conduction device 41 and the inner face of the recessed portion 43, a certain contrivance for fixing the outside portion of the buffering member 44 to the inner face of the recessed portion 43 rigidly and permanently is required to be provided.

Then, it is an object of the present invention to provide a mobile phone which is free from the problems as described above, in other words, a mobile phone using a bone conduction device which minimizes the installation space for the bone conduction device; which can be assembled easily; with which there is no possibility of foreign matters, such as iron powder and dirt and dust, getting in from around the bone conduction device; and yet which allows it to deliver a high volume output with no need for increasing the thickness of the housing of the mobile phone body, being able to be used without an obstacle under noise conditions.

### Means for Solving the Problems

The invention according to claim 1 to solve the aforementioned problem is a mobile phone using a bone conduction device, including: in one face of a housing, there being provided an opening having a diameter larger than that of the bone conduction device to be installed therein, with a buffering member being disposed on the upper edge portion and/or the inner face of the opening, and an abutting member which is fixed to a plate yoke constituting the bone conduction device being supported by the buffering member such that the top face of the abutting member is located slightly above the surface of the housing.

In a first embodiment of the present invention, the buffering member is an annular plate in which there is formed a central hole having a diameter slightly smaller than the outer diameter of the bone conduction device, a half portion on the outer edge side of the buffering member being securely set on the upper edge portion of the opening of the housing, and the outer edge portion of the abutting member being securely set on the upper edge portion of the central hole in the buffering member.

In a second embodiment of the present invention, the buffering member is an annular plate in which there is formed a central hole having a diameter slightly smaller than the outer diameter of the bone conduction device, the buffering member being fitted into the opening in the housing, and the outer edge portion of the abutting member is securely set on the upper edge portion of the central hole in the buffering member.

In a third embodiment of the present invention, the buffering member is a dish-like piece in which there are formed a central hole having a diameter slightly smaller than the outer diameter of the bone conduction device, and an abutting member fitting space in communication with the central hole, and the buffering member is fitted into the opening in the housing with the abutting member being tightly fitted into the abutting member fitting space.

In a fourth embodiment of the present invention, the buffering member is an annular plate in which there is formed a central hole having a diameter slightly smaller than the outer diameter of the bone conduction device, a device case being provided which houses the bone conduction speaker with a gap being maintained between the peripheral face and bottom face thereof and the device case, the abutting member being disposed so as to blockade an opening in the top face of the device case, and the buffering member being fitted into the opening in the housing with the device case being fitted into the central hole thereof.

### Advantages of the Invention

Since the present invention is as described above, there are offered advantages that it is only required that, between the bone conduction speaker and the inner face of the opening in the housing or the inner face of the central hole in the buffering member, there be maintained a slight gap (as small as 0.5 mm in size) in order to prevent the bone conduction device from being contacted with another part upon being vibrated, whereby the space required for installing the bone conduction speaker can be minimized, and therefore, the need for increasing the thickness of the housing is eliminated, and that the buffering member which supports the bone conduction speaker can be assembled simply by fitting it into the opening in the housing for fixing it, whereby the assembling operation can be easily and rapidly performed.

Further, there are offered advantages that, since there is produced no gap between the opening in the housing and the bone conduction speaker that allows dirt and dust to be accumulated, there is no possibility that foreign matters, such as iron powder and dirt and dust, may get in from around the bone conduction speaker, whereby there being no possibility that the mobile phone may fail or have a deteriorated performance due to such foreign matters getting in.

### Brief Description of the Drawings

Figure 1 is a sectional view of a critical portion in one embodiment of a mobile phone using a bone conduction device in accordance with the present invention;
Figure 2 is a sectional view of a critical portion in another embodiment of a mobile phone using the bone conduction device in accordance with the present invention;
Figure 3 is a sectional view of a critical portion in still another embodiment of a mobile phone using the bone conduction device in accordance with the present invention;
Figure 4 is a sectional view of a critical portion in still another embodiment of a mobile phone using the bone conduction device in accordance with the present invention;
Figure 5 is an exploded perspective view illustrating an example of configuration of bone conduction device that is used in a mobile phone using the bone conduction device in accordance with the present invention;
Figure 6 is a sectional view of a critical portion illustrating one example of configuration of a mobile phone using a conventional bone conduction speaker; and
Figure 7 is a sectional view of a critical portion illustrating another example of configuration of a mobile phone using a conventional bone conduction speaker.

### Best Mode for Carrying Out the Invention

Hereinbelow, preferred embodiments for carrying out the present invention will be explained with reference to the drawings. The following explanation is for the case where a bone conduction speaker is used as a bone conduction device, however, the explanation is applicable also to the bone conduction microphone with no need for adaptation. This is because both devices can be configured to be substantially the same in construction, although there is a difference in function between both, i.e., a difference between a function of the vibration being transmitted from the diaphragm to the skull, and that of the vibration of the skull being picked up with the diaphragm.

With the mobile phone using the bone conduction device in accordance with the present invention, in one face of a housing 1, there is provided an opening 2 having a diameter larger than that of a bone conduction device 3 to be installed therein, with a buffering member 4 being disposed on the upper edge portion and/or the inner face of the opening 2, and an abutting member 7 which is fixed to a plate yoke 15 constituting the bone conduction device 3 being supported by the buffering member 4 such that the top face of the abutting member 7 is located slightly above the surface of the housing 1. In general, the top face of the abutting member 7 is formed in a gradually curved surface.

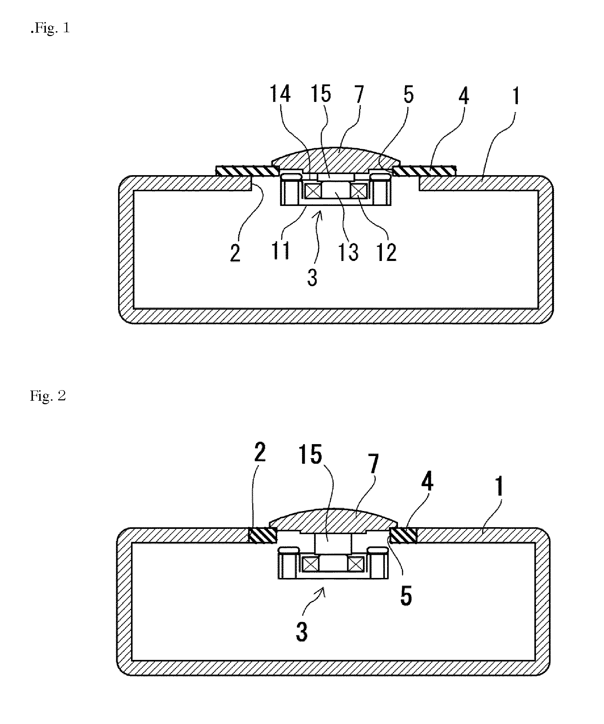

Figure 1 illustrates a first embodiment of the present invention, and in this embodiment, the buffering member 4 is an annular plate (generally, an annular disk, and this holds true also for an annular plate in later-described respective embodiments) in which there is formed a central hole 5 (generally, a round hole, and this holds true also for a central hole in the later-described respective embodiments) having a diameter slightly smaller than the outer diameter of the bone conduction device 3, a half portion on the outer edge side of the buffering member 4 being securely set on the upper edge portion of the opening 2 of the housing 1, and the outer edge portion of the abutting member 7 being securely set on the upper edge portion of the central hole 5 in the buffering member 4.

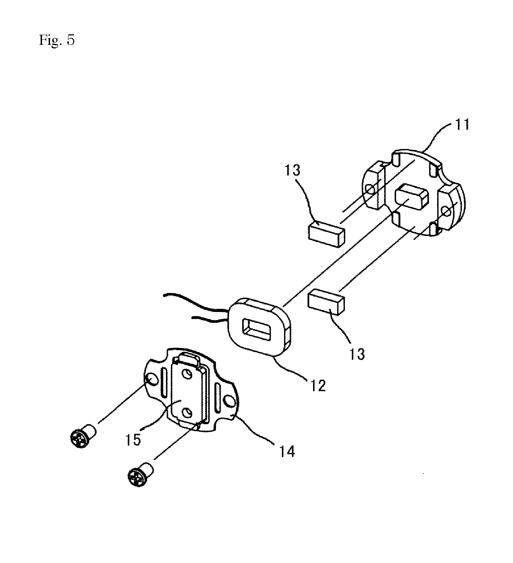

The bone conduction speaker 3 to be used here is of so-called external magnet type, in which, for example, particularly as shown in Figure 5, a diaphragm 14 is stationarily fixed on a yoke 11 with a slight gap being maintained therebetween, the yoke 11 carrying a voice coil 12 and magnets 13, and the plate yoke 15 is fixed on the diaphragm 14, being faced to a central opening formed in the diaphragm 14, however, the bone conduction speaker 3 may be of so-called internal magnet type, in which the magnet is disposed inside the voice coil.

Figure 2 illustrates a second embodiment of the present invention, and in this embodiment, the buffering member 4 is an annular plate in which there is formed a central hole 5 having a diameter slightly smaller than the outer diameter of the bone conduction device 3, the buffering member 4 being fitted into the opening 2 in the housing 1, and the outer edge portion of the abutting member 7 is securely set on the upper edge portion of the central hole 5 in the buffering member 4.

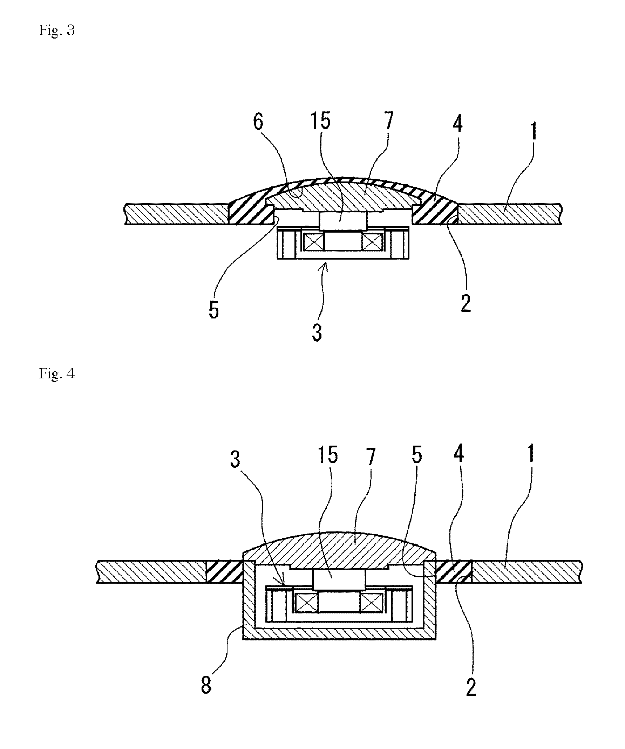

Figure 3 illustrates a third embodiment of the present invention, and in this embodiment, the buffering member 4 is a dish-like piece in which there are formed a central hole 5 having a diameter slightly smaller than the outer diameter of the bone conduction device 3, and an abutting member fitting space 6 in communication with the central hole 5. This buffering member 4 is fitted into the opening 2 in the housing 1 with an abutting member 7 being tightly fitted into the abutting member fitting space 6.

Figure 4 illustrates a fourth embodiment of the present invention, and in this embodiment, the buffering member 4 is an annular plate in which there is formed a central hole 5 having a diameter slightly smaller than the outer diameter of the bone conduction device 3, and which is fitted into the opening 2 in the housing 1. The bone conduction speaker 3 is housed in a device case 8 with a gap being maintained between the peripheral face and bottom face thereof and the device case 8, an abutting member 7 which is fixed to the plate yoke 15 being disposed so as to blockade an opening in the top face of the device case 8. In other words, the abutting member 7 and the device case 8 is integrally formed to have a shape like a box. The device case 8 which is thus integrated with the abutting member 7, housing the bone conduction device 3, is fitted into the central hole 5 in the buffering member 4.

In any one of the above embodiments, the buffering member 4 is formed of a rubber, plastic, or other material having a damping property like a conventional one, serving so as to prevent the bone conduction speaker 3 from being directly contacted with the housing, however, in order to provide an integrity with the housing as much as possible, it is preferable that the buffering member 4 be flush with the housing 1. In other words, in place of the buffering member 4 being securely set on the upper edge portion in the opening 2 as in the first embodiment shown in Figure 1, it is preferable that, as in the other embodiments shown in Figure 2 to Figure 4, the buffering member 4 be fitted into the opening 2 so as to be flush with the housing 1.

With the mobile phone using the bone conduction device in accordance with the present invention, it is only required that, between the bone conduction speaker 3 and the inner face of the opening 2 in the housing 1 or the inner face of the central hole 5 in the buffering member 4, there be maintained a slight gap (as small as 0.5 mm in size) in order to prevent the bone conduction device 3 from being contacted with another part upon being vibrated, whereby the space required for installing the bone conduction speaker 3 can be minimized. Therefore, the need for increasing the thickness of the housing 1 is eliminated, and in addition, the buffering member 4 which supports the bone conduction speaker 3 can be assembled simply by fitting it into the opening 2 in the housing 1 for fixing it, whereby the assembling operation can be easily and rapidly performed.

Further, since there is produced no gap between the opening 2 in the housing 1 and the bone conduction speaker 3 that allows dirt and dust to be accumulated, there is no possibility that foreign matters, such as iron powder and dirt and dust, may get in from around the bone conduction speaker 3, whereby there being no possibility that the mobile phone may fail or have a deteriorated performance due to such foreign matters getting in. And, since the bone conduction speaker 3 is attached to the housing 1 through the buffering member 4 made of an elastic material, thereby being isolated from the housing 1, it is difficult that the vibration is transmitted to the housing 1 (in the case of a bone conduction microphone, it is difficult that the vibration of the housing 2 is picked up).

Hereinabove, the present invention has been explained in detail to some extent, and about the most preferred embodiments, however, since it is obvious that a wide range of different embodiments can be made without departing from the spirit and scope of the present invention, it is to be understood that the present invention is not limited to the specific embodiments thereof except as defined in the appended claims.

## Claims

1. A mobile phone using a bone conduction device, comprising* in one face of a housing, there being provided an opening having a diameter larger than that of the bone conduction device to be installed therein, with a buffering member being disposed on the upper edge portion and/or the inner face of said opening, and an abutting member which is fixed to a plate yoke constituting said bone conduction device being supported by said buffering member such that the top face of the abutting member is located slightly above the surface of said housing.

2. The mobile phone using a bone conduction device according to claim 1, wherein said buffering member is an annular plate in which there is formed a central hole having a diameter slightly smaller than the outer diameter of said bone conduction device, a half portion on the outer edge side of said buffering member being securely set on the upper edge portion of the opening of said housing, and the outer edge portion of said abutting member being securely set on the upper edge portion of the central hole in said buffering member.

3. The mobile phone using a bone conduction device according to claim 1, wherein said buffering member is an annular plate in which there is formed a central hole having a diameter slightly smaller than the outer diameter of said bone conduction device, said buffering member being fitted into the opening in said housing, and the outer edge portion of said abutting member is securely set on the upper edge portion of the central hole in said buffering member.

4. The mobile phone using a bone conduction device according to claim 1, wherein said buffering member is a dish-like piece in which there are formed a central hole having a diameter slightly smaller than the outer diameter of said bone conduction device, and an abutting member fitting space in communication with the central hole, and said buffering member is fitted into the opening in said housing with said abutting member being tightly fitted into the abutting member fitting space.

5. The mobile phone using a bone conduction device according to claim 1, wherein said buffering member is an annular plate in which there is formed a central hole having a diameter slightly smaller than the outer diameter of said bone conduction device, a device case being provided which houses said bone conduction speaker with a gap being maintained between the peripheral face and bottom face thereof and the device case, said abutting member being disposed so as to blockade an opening in the top face of said device case, and said buffering member being fitted into the opening in said housing with said device case being fitted into the central hole thereof.
